# EUROPEAN PATENT APPLICATION

(11) **EP 3 868 637 A1**
(43) Date of publication of application: **25.08.2021**
(21) Application number: 21158229.1
(22) Date of filing: 19.02.2021
(51) Int. Cl.: B62K 7/04, B62K 21/18

(54) **BIKE**

(30) Priority: 21.02.2020 NL 2024962
(71) Applicant: Koninklijke Gazelle N.V., 6951 BP Dieren (NL)
(72) Inventor: Lammers, Edmond, 6951 BP Dieren (NL); Heida, Sierd, 6951 BP Dieren (NL)
(74) Representative: De Vries & Metman

(57) **Abstract**

Bike (1), in particular a cargo bike, comprising:
- a frame (2) with a head set (3);
- a steerer tube (4) received in the head set;
- a front frame (5) holding at least one front wheel (6) ;
- a steering linkage (18) between the steerer tube and the front frame transferring rotation of the steerer tube to the front frame;
- an auxiliary support (25), such as a support arm, with one end hinged to the steering linkage and one end hinged relative to the frame.

## Description

The present disclosure relates to a bike, in particular to a cargo bike, such as a so-called Long John bicycle. Such a bike typically comprises:
- a frame with a head set;
- a steerer tube received in the head set;
- a front frame holding at least one front wheel;
- a steering linkage between the steerer tube and the front frame transferring rotation of the steerer tube to the front frame, so as to allow a driver to steer the front wheel or wheels. Examples of such bikes are disclosed in MX 2017015508 and CN 208789864. DE 20 2014 003 119 discloses a cargo bike with a complex steering linkage of separate links at different levels.

The steering linkage of a cargo bike is usually below the cargo area, having a rear end connected to an arm radially extending from a lower section of the steerer tube, and a front end connected to the front frame. The steering linkage typically has a hook-shaped front section bent sideward away from the front wheel to allow steering of the front wheel.

The front frame, or front fork if the bike has a single front wheel, is typically connected to a front end of the frame by means of a bearing allowing rotation of the front frame about a steering axis.

Since the steering axis of the front wheel typically makes a rearward sharp angle with the vertical, moving the front wheel will also move the front end of the steering linkage up and down. Moreover, the rotational axis of the steerer tube is not always parallel to the front wheel steering axis. This results in heavy steering. To prevent heavy steering, the steering linkage is usually connected to the front fork and the steerer tube by means of joints allowing at least some degree of rotation about an axis extending substantially in longitudinal direction of the bike, such as for example ball-and-socket joints or spherical joints. As a result, the steering linkage has an additional freedom of movement allowing it to rotate about an axis connecting the rear and front joints. This can cause joggling of the linkage and rattling. Moreover, the hook shaped front section tends to hang down, thus reducing the space for steering movement of the front wheel and increasing the risk of impacting the front wheel or other parts of the bike during a sharp turn.

The object of the invention is to provide a bike with a steering linkage having a reduced risk of joggling, rattling or impacting the front wheel.

The object of the invention is achieved with a bike comprising an auxiliary support with one end hinged to the steering linkage and one end hinged relative to the frame. Due to the auxiliary support, the steering linkage is now supported at three points, jointly defining a statically determinate support. This prevents joggling and rattling. Since the hook part cannot hang down, the space for front wheel movement is not reduced and the risk of impacting during a sharp turn is not increased. The auxiliary support hinges to allow steering movement. The auxiliary support can be hinged directly to the frame or via any part fixed to the frame, such as a cargo container. The auxiliary support can for example be a cable or an auxiliary support arm, resulting in a four bar linkage.

In a specific embodiment, the auxiliary support is an auxiliary support arm, which has one end connected to the frame by means of a first spherical joint and a second end connected to the steering linkage by a second spherical joint. The spherical joints allow the auxiliary support arm to follow up and down movement of the steering linkage caused by the inclined rotational axis of steering movement of the front wheel. Joggling is still prevented since the auxiliary support arm maintains a constant distance between its connection to the steering linkage and its connection to the frame, e.g., as with a parallelogram linkage.

The steering linkage is usually connected to the steerer tube by means of a radial arm fixed to the steerer tube, in particular to a lower section of the steerer tube. This radial arm extends radially relative to the longitudinal axis of the steerer tube. The radial arm is typically connected to a rear end of the steering linkage by means of a rear spherical joint. In a specific embodiment, the auxiliary support arm is substantially parallel to the radial arm.

The front end of the steering linkage is usually connected to the front frame by means a front spherical joint. The front spherical joint, the rear spherical joint and the first and second spherical joints of the auxiliary arm can be of the same type or they can be different types.

Optionally, the joint, which joins the auxiliary arm to the steering linkage, is offset from the line between the rear and front joints of the steering linkage. This reduces the rotational moment caused by the weight of the hooked part. If the joints are spherical joints, the offset position of the joint of the auxiliary arm prevents the hook part from hanging down. The same effect can be achieved by shaping the steering linkage such that the centre of gravity is moved to the line connecting the rear and front spherical joints. This can for example be done by providing the rear section with a curved or hooked section extending in a direction opposite to the hook shape section next to the front wheel. In these cases, the auxiliary arm can be construed much lighter, e.g., as a cable, or as a set of two or more arms with a sliding link to the steering linkage, each arm supporting the steering linkage for a single degree of freedom.

Optionally, the auxiliary arm has a length, such that the steering linkage is essentially parallel to a longitudinal axis of the bike, in top view.

Optionally, the steering linkage is substantially horizontal when the front wheel is directed into a straight forward direction.

The bike can be a cargo bike, a motor bike or any other type of bike such as e-bikes, step scooters, motor scooters, trikes or conventional bikes having its front wheel spaced from the steerer tube.

The above-described aspects will hereafter be more explained with further details and benefits with reference to the drawings showing a number of embodiments by way of example.
Figure 1: shows an exemplary embodiment of a cargo bike in perspective view;
Figure 2: shows the cargo bike of Figure 1 without the load container;
Figure 3: shows the cargo bike of Figure 1 without the load container in bottom view;
Figure 4: shows the cargo bike of Figure 1 in top view without the load container and without the frame;
Figure 5: shows the cargo bike of Figure 1 in perspective view without the load container and without the frame.

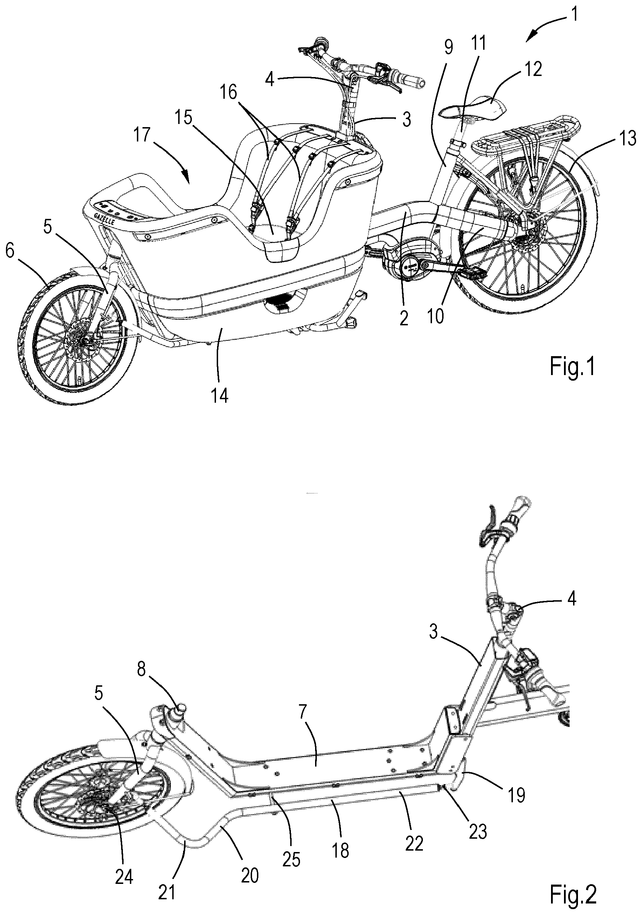

Figure 1 shows a cargo bike 1. The cargo bike 1 comprises a frame 2 with a head set 3, a steerer tube 4 received in the head set 3 and a front fork 5 holding a front wheel 6. As shown in Figure 2, a central beam 7 connects the head set 3 to a bearing 8 receiving the front fork 5 in a manner allowing steering rotation. The front fork 5 tilts backwards, so the rotational axis of the steering movement is also rearwardly inclined, as is usual for bicycles.

The frame 2 further comprises a seat tube 9 and a rear fork 10. The seat tube holds a height adjustable seat pen 11 supporting a saddle 12. The rear fork 10 holds a rear wheel 13.

The cargo bike 1 has a cargo container 14 between the head set 3 and the front fork 5 supported by the central beam 7. In the shown exemplary embodiment, the cargo container 14 is particularly designed for transporting small children, having seats 15, safety belts 16 and a recessed side wall 17 with rounded corners and edges.

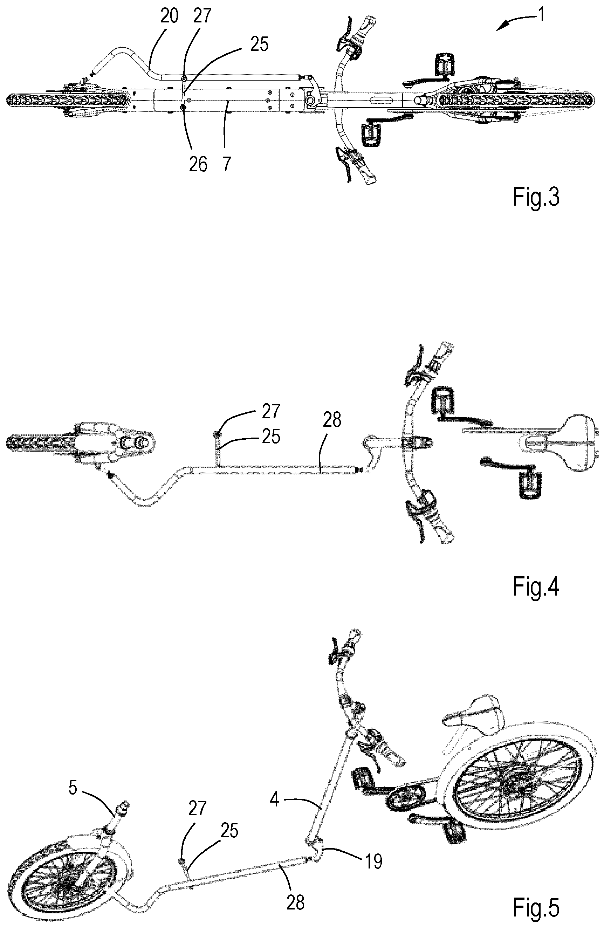

Since the front fork 5 is spaced from the steerer tube 4, the steerer tube 4 cannot directly be connected to the front fork 5. Instead, a steering linkage 18 (Figures 2 - 5) links the steerer tube 4 and the front fork 5 to transfer rotational movement from the steerer tube 4 to the front fork 5, so as to allow a driver to use the steer for steering the front wheel 6. The steering linkage 18 extends below the cargo container substantially parallel to the central beam of the frame. Figures 2 and 3 show the cargo bike 1 without the cargo container in order to make the steering linkage 18 visible.

The steering linkage 18 comprises a radial arm 19 extending radially from the lower end of the steerer tube 4. The radial arm 19 is fixed to the steerer tube 4 and thus rotates with the steerer tube 4 during steering.

The steering linkage 18 further comprises a beam 20 with a hook-shaped front section 21 and a straight rear section 22. The hook-shaped front section 21 borders steering movement by the front wheel 6 (see, e.g., Figure 4).

Due to the rearward inclination of the front fork 5, moving the front wheel 6 will also move the steering linkage 18 up and down. To allow this limited up and down movement, a rear spherical joint 23 is used to connect the rear end of the rear section 22 to the radial arm 19 of the steerer tube 4. A front spherical joint 24 connects a front end of the hook-shaped front section 21 to the front fork 5.

The beam 20 of the steering linkage 18 is essentially parallel to a longitudinal axis of the cargo bike 1 in top view. The steering linkage 18 is substantially horizontal, when the front wheel 6 is in its middle position, i.e., in line with the longitudinal main axis of the cargo bike 1.

The use of a front and rear spherical joints 23, 24 introduces a freedom of rotation of the steering linkage 18 relative to the axis extending between the two spherical joints 23, 24. The weight of the hook-shaped section 21 creates a torque over this axis, tending to turn down the hook-shaped section 21.

An auxiliary support arm 25 extends between the central beam 7 of the frame 2 and the straight rearward section 22 of the steering linkage. The auxiliary support arm 25 has one end connected to the central beam 7 by means of a beam spherical joint 26, and a second end connected to the steering linkage 18 by means of a linkage spherical joint 27 (Figure 3). The auxiliary support arm 25 supports the steering linkage 18 and prevents that the steering linkage 18 turns down by the weight of the hook-shaped section 21. Due to the beam spherical joint 26 and the linkage spherical joint 27, the auxiliary support arm 25 is able to move with the limited up and down movement of the steering linkage 18 during steering.

When the front wheel 6 is in its middle position, the auxiliary support arm 25 extends perpendicular to the central longitudinal axis of the cargo bike 1, and perpendicular to the rear section 22 of the steering linkage 18. Other arrangements can also be used, if so desired.

It is noted that the drawings are schematic, not necessarily to scale, and that details that are not required for understanding the present invention may have been omitted. The terms "upward", "downward", "below", "above", and the like relate to the embodiments as oriented in the drawings, unless otherwise specified.
The disclosure is not restricted to the above described embodiments which can be varied in a number of ways within the scope of the claims.

## Claims

1. Bike (1) comprising:
- a frame (2) with a head set (3);
- a steerer tube (4) received in the head set;
- a front frame (5) holding at least one front wheel (6) ;
- a steering linkage (18) between the steerer tube and the front frame transferring rotation of the steerer tube to the front frame,
**characterized by** an auxiliary support (25) with one end hinged to the steering linkage and one end hinged relative to the frame.

2. Bike according to claim 1, wherein the auxiliary support comprises an auxiliary support arm (25).

3. Bike according to claim 2, wherein the auxiliary support arm (25) has one end connected to the frame by a spherical joint (26) and a second end connected to the steering linkage by a spherical joint (27).

4. Bike according to claim 2 or 3, wherein the auxiliary support arm (25) is substantially parallel to a radial arm (19) which is fixed to a lower portion of the steerer tube, and hinged to a rear end of the steering linkage (18).

5. Bike according to any preceding claim, wherein the steering linkage (18) comprises a single beam (20) with a hook-shaped front section (21) defining a range of steering movements of the front wheel.

6. Bike according to any one of the preceding claims, wherein the steering linkage (18) comprises a rear section (22) essentially parallel to a longitudinal axis of the bike in top view, the auxiliary support arm (25) being connected to the rear section of the steering linkage.

7. Bike according to any preceding claim, wherein the steering linkage (18) is substantially horizontal.

8. Bike according to any preceding claim, wherein the steering linkage (18) is below a cargo area of the bike.

9. Bike according to any preceding claim, wherein the steering linkage (18) has a front spherical joint (24) at the front end connecting to the fork, and a rear spherical joint (23) at the rear end connecting to a radial arm (19) at the bottom end of the steerer tube.

10. Bike according to claim 1-9, wherein the joint connecting the steering linkage (18) and the auxiliary support arm (25) is offset from a line between the front joint (24) and the rear joint (23).

11. Bike according to claims 5 and 9 or 10, wherein the rear section has a geometry at least partly compensating for the hooked front section spacing the center of gravity of the steering linkage from the line between the front spherical joint (24) and the rear spherical joint (23).

12. Bike according to any preceding claim, wherein the bike is a cargo bike comprising a cargo container (3) between the front frame and the steerer tube.
